# EUROPEAN PATENT APPLICATION

(11) **EP 4 459 426 A1**
(43) Date of publication of application: **06.11.2024**
(21) Application number: 22915634.4
(22) Date of filing: 02.12.2022
(51) Int. Cl.: G06F 3/01, G06F 3/0481

(54) **SYSTEM FOR IMPROVING REALISTIC SENSATIONS AND PROGRAM FOR IMPROVING REALISTIC SENSATIONS IN VR**

(30) Priority: 27.12.2021 US 202163293983 P
(71) Applicant: Panasonic Holdings Corporation, Osaka 571-8501 (JP)
(72) Inventor: KOZUKA, Masayuki, Osaka 571-0057 (JP); MORI, Yoshihiro, Osaka 571-0057 (JP); IWASA, Takuma, Osaka 571-0057 (JP)
(74) Representative: Eisenführ Speiser
(86) International application number: PCT/JP2022/044600
(87) International publication number: WO 2023/127403

(57) **Abstract**

This system for improving realistic sensations in VR comprises: a VR video generation unit for generating VR video data that includes perceived temperature information on the basis of VR space data in which the perceived temperature information is embedded; a temperature detection unit for extracting the perceived temperature information from the VR video data generated by the VR image generation unit; an XR control unit for controlling XR goggles so as to display a VR video on the basis of the VR video data; and a low-temperature device control unit for controlling a low-temperature device that adjusts the perceived temperature of a VR-experiencing person wearing the XR goggles, on the basis of the perceived temperature information extracted by the temperature detection unit.

## Description

### Technical Field

The present disclosure relates to a VR presence enhancement system and a VR presence enhancement program.

### Background Art

There have been proposed VR presence enhancement systems that change a sensory temperature of a VR experiencer who experiences Virtual Reality (VR) depending on the VR image. For example, Patent Literature (hereinafter, referred to as PTL) 1 discloses changing a temperature of a cooling/heating device depending on a temperature of a VR space being experienced or an object in the VR space while the user is experiencing the VR space through XR goggles (including VR-Head Mount Display (VR-HMD), VR glasses, AR glasses, MR-HMD, and the like), and also discloses a wearable cooling/heating device capable of changing a temperature and a VR controller and gaming pad that transmit a temperature. In addition to the above, it is possible to change a sensory temperature depending on a VR space as long as a temperature of a device can be controlled by a computer.

### Citation List

### Patent Literature

### PTL 1

US Patent No. 10561374

### Summary of Invention

### Technical Problem

However, PTL 1 does not disclose a specific method for transmitting temperature data associated with a VR space to a cooling/heating device.

An object of the present disclosure is to provide a VR presence enhancement system and a VR presence enhancement program by which a sensory temperature in a VR space can be easily experienced.

### Solution to Problem

A VR presence enhancement system according to the present disclosure includes: a VR image generator that generates VR image data including sensory temperature information, based on VR space data in which the sensory temperature information (temperature, humidity, wind force, wind direction, and the like) is embedded; a temperature detector that extracts the sensory temperature information from the VR image data generated by the VR image generator; an XR goggles controller that controls XR goggles to display a VR image based on the VR image data; and a cooling/heating device controller that controls a cooling/heating device based on the sensory temperature information extracted by the temperature detector, the cooling/heating device adjusting a sensory temperature of a VR experiencer wearing the XR goggles.

A VR presence enhancement program according to the present disclosure causes a computer to execute processing comprising: generating VR image data including sensory temperature information based on VR space data in which the sensory temperature information is embedded; extracting the sensory temperature information from the generated VR image data; controlling XR goggles to display a VR image based on the VR image data; and controlling a cooling/heating device adjusting a sensory temperature of a VR experiencer wearing the XR goggles based on the extracted sensory temperature information.

### Advantageous Effects of Invention

According to the present disclosure, it is possible to easily experience a sensory temperature in a VR space.

### Brief Description of Drawings

FIG. 1 illustrates a system configuration of a VR presence enhancement system according to Embodiment 1 of the present disclosure;
FIG. 2 illustrates an exemplary VR image generated by a VR image generator;
FIG. 3 illustrates another system configuration of the VR presence enhancement system according to Embodiment 1 of the present disclosure;
FIG. 4 illustrates a system configuration of a VR presence enhancement system according to Embodiment 2;
FIG. 5 is a flowchart illustrating an operation of creating a world in Embodiment 2.
FIG. 6 is a flowchart illustrating a variation of the operation of creating a world in Embodiment 2.
FIG. 7 is a flowchart illustrating an operation of executing the world in Embodiment 2.
FIG. 8 is a flowchart illustrating a variation of the operation of executing the world in Embodiment 2.
FIG. 9 illustrates a state in which a sensory temperature set object is set in a VR image in Embodiment 2.
FIG. 10 illustrates a state in which the sensory temperature set object is set in the VR image in a variation of Embodiment 2.
FIG. 11 illustrates a state in which a special mark is superimposed on a VR image in another variation of Embodiment 2.
FIG. 12 illustrates a configuration of a main part of a VR presence enhancement system according to a variation; and
FIG. 13 illustrates a configuration of a main part of a VR presence enhancement system according to another variation.

### Description of Embodiments

Hereinafter, an embodiment according to the present disclosure will be described with reference to the accompanying drawings.

### (Embodiment 1)

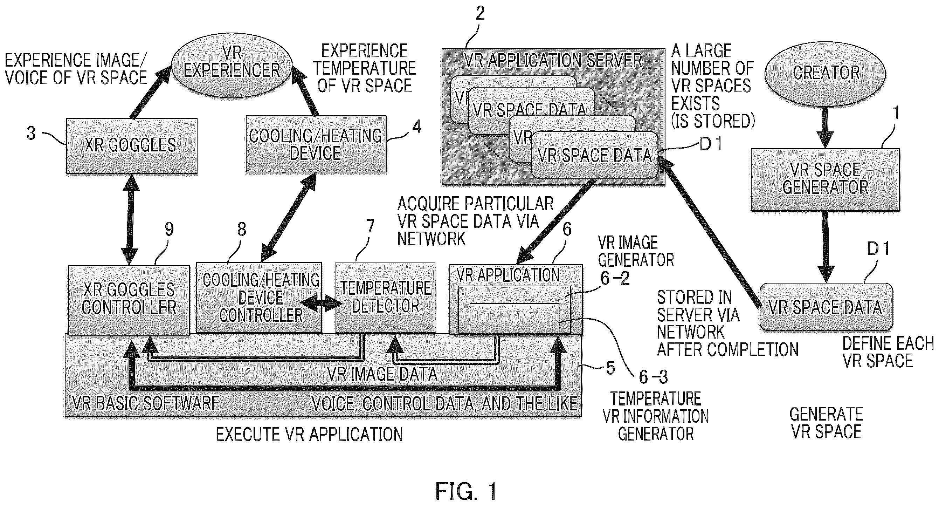

FIG. 1 illustrates a VR presence enhancement system according to Embodiment 1 of the present disclosure. The VR presence enhancement system includes VR space creator 1, VR application server 2, XR goggles 3, cooling/heating device 4, VR basic software 5, VR application 6, VR image generator 6-2 in VR application 6, and VR information generator for temperatures (hereinafter, referred to as temperature VR information generator) 6-3 in VR image generator 6-2. VR space creator 1, VR application server 2, and VR basic software 5 can be connected to each other via a network, for example. Further, XR goggles 3 and cooling/heating device 4 are each connected to VR basic software 5 through a network cable or the like.

VR space creator 1 is configured with VR space creation software having a function of generating VR space data D1 and embedding sensory temperature information in VR space data D1. At this time, VR space creator 1 creates, for example, VR space data D1 in which sensory temperature data are embedded in association with coordinate data of the VR space. Further, VR space creator 1 creates VR space data D1 composed of a Computer Graphics (CG) based VR space such as a metaverse.

For example, when creating a VR space, VR space creator 1 may embed sensory temperature information in VR space data D1, associating the information with a predetermined area that is set in the VR space. At this time, the sensory temperature information may be set so that the sensory temperature in the predetermined area is constant. Further, the predetermined area is constituted by a 3D object for setting a sensory temperature, and an avatar can enter the 3D object. VR space data D1 may be set so that the sensory temperature information is included as the attribute of the 3D object. For example, when creating a VR space, VR space creator 1 places an object that is transparent and does not interrupt the actions of an avatar, in a predetermined area of the VR space where the sensory temperature is set. At this time, the sensory temperature may be set as the attribute of the object. Then, based on the sensory temperature information set as the attribute of the object, VR space creator 1 can set, to VR space data D1, an operation of displaying sensory temperature information as graphics in the field of view of XR goggles 3 when the avatar enters the object.

The sensory temperature information is herein one of non-audiovisual information that cannot be acquired visually or audibly by a VR experiencer among the environmental information in a VR space, and the examples include information such as a temperature, humidity, a wind force, and a wind direction depending on a location in the VR space. Further, VR space creation software in VR space creator 1 is software for creating VR space data used in a VR application. For example, VR space creation software has a function of creating a VR image using CG, and when a VR space is created by this function, data for controlling a cooling/heating device can be embedded in the VR image.

VR application server 2 stores a plurality of VR space data including VR space data D1 created by VR space creator 1.

XR goggles 3 are for displaying a Virtual Reality (VR) image for a VR experiencer. Specifically, XR goggles 3 display an image of the VR space transmitted from VR basic software 5 through VR basic software, output sound, and make the VR experiencer experience the VR space, depending on the direction and movement of the VR experiencer wearing XR goggles 3.

Cooling/heating device 4 adjusts the sensory temperature of the VR experiencer in response to a control signal from VR basic software 5. Cooling/heating device 4 may be directly placed on the body of the VR experiencer (wearable device), for example, or may be an air conditioner, warm-air heater, fan, humidifier, air cleaner, light, curtain (temperature adjustment by a shielding effect), or the like, which is placed away from the body of the VR experiencer (non-wearable device). The contactless device may be an IoT-function incorporated device or a device capable of being controlled by an infrared remote control or the like from an IoT device. For example, cooling/heating device 4 may be formed of a heat exchanger using Peltier elements or gas (the same mechanism as common air conditioner), a heat pipe, or the like.

On VR basic software 5, VR image generator 6-2, temperature detector 7, cooling/heating device controller 8, and XR goggles controller 9 running on this VR basic software are included. Note that the VR basic software is software that transmits audio, vibrations, and another information as well as operating a VR application and displaying a VR space on XR goggles 3 through XR goggles control software of XR goggles controller 9. The VR basic software can be configured with, for example, SteamVR, OPENVR, OPENXR, or the like.

VR image generator 6-2 in VR application 6 generates VR image data including sensory temperature information based on VR space data D1 in which sensory temperature information is embedded. VR application 6 can, for example, cause creation of a VR space, movement in the VR space depending on the information on XR goggles 3 and its peripheral transmitted from XR goggles controller 9, and interaction of objects and an avatar within the VR space.

Temperature detector 7 extracts sensory temperature information from VR image data generated by VR image generator 6-2. Temperature detector 7, which is realized by, for example, a temperature detection add-on, can extract VR image data transmitted from VR image generator 6-2 to XR goggles 3 through XR goggles controller 9 in the middle of processing, and detect the sensory temperature information combined with the VR image data by the temperature detection add-on. That is, VR image data are outputted from VR image generator 6-2 to XR goggles controller 9 through temperature detector 7, and sensory temperature information included in the VR image data is detected at temperature detector 7 in accordance with the temperature detection add-on. Temperature detector 7 transmits the detected sensory temperature information to cooling/heating device 4 through cooling/heating device controller 8, and the temperature of cooling/heating device 4 is controlled based on this sensory temperature information. Further, temperature detector 7 outputs VR image data to XR goggles controller 9.

Cooling/heating device controller 8 controls cooling/heating device 4 based on the sensory temperature information of the VR space extracted by temperature detector 7. At this time, cooling/heating device controller 8 appropriately controls cooling/heating device 4 in accordance with the profile (such as controllable function (only temperature, or temperature, humidity, and the like), range (temperature range, humidity range, or the like)) of cooling/heating device 4 to be used, and adjusts the sensory temperature by changing the temperature, humidity, and/or the like of cooling/heating device 4.

XR goggles controller 9 controls XR goggles 3 to display a VR image based on the VR image data. Further, XR goggles controller 9 controls XR goggles 3 and simultaneously transmits the information on XR goggles 3 including the information on the peripheral of XR goggles 3 to VR basic software 5 and VR application 6.

Next, an operation of the present embodiment is described.

First, VR space creator 1 creates VR data D1 in which temperature data are embedded in association with coordinate data of a VR space by using a VR space creation tool such as VR space creation software. It is herein assumed that VR space creator 1 creates VR space data D1 of a metaverse.

Note that examples of the metaverse include a type of a virtual world in which participants join as avatars in a 3D virtual space constructed by CG through XR goggles 3, a smart phone, or the like, communicate with each other, enjoy entertainment, and shop. Examples of the metaverse using XR goggles 3 include VRChat. For the VRChat, a development kit is provided, which allows users to use the avatars created by the users themselves, create a world, share the world created by a plurality of creators by other participants visiting the world, and visit each other's worlds.

VR space creator 1 transmits the created VR space data D1 to VR application server 2. Then, VR application server 2 stores VR space data D1 transmitted from VR space creator 1 as one world in the metaverse.

The VR experiencer activates XR goggles 3 and connects XR goggles 3 to VR control software (XR goggles controller 9) on VR basic software. The VR application and temperature detector 7 (temperature detection add-on) are also activated on VR basic software 5.

Then, when the VR experiencer participates in the desired metaverse world, VR image generator 6-2 acquires VR space data D1 corresponding to the selection from VR application server 2 via the network.

VR application 6 including VR image generator 6-2 constructs a VR space using CG, such as a VR game and a metaverse, and then the VR experiencer wearing XR goggles 3 can change the position of his/herself and the direction of the head and body in the VR space according to the movement and motion of the VR experiencer. Conventionally, in experiencing of VR using CG, a device dedicated to a theme park, a VR game arcade (Location Based Entertainment: LBE), or the like can provide stimuli other than audiovisual stimuli (temperature, wind, gravitational force, or the like) to a VR experiencer by embedding data indicating temperatures with CG and using the embedded data. However, no general-purpose mechanism has been developed. Further, the VR application has a function of playing back audiovisual information, but does not have a standard mechanism of reproducing a sensory temperature and gravity movement (VRChat and another metaverse software are separate applications, and thus a mechanism of reproduction other than audiovisual stimuli is separately required). Thus, a dedicated method for controlling sensory temperature information is required for each VR application 6. Further, for VR applications using CG, a method for transmitting sensory temperature information varies between the case in which temperature management in a wide range is sufficient and the case in which temperature management is required for each object in a VR space.

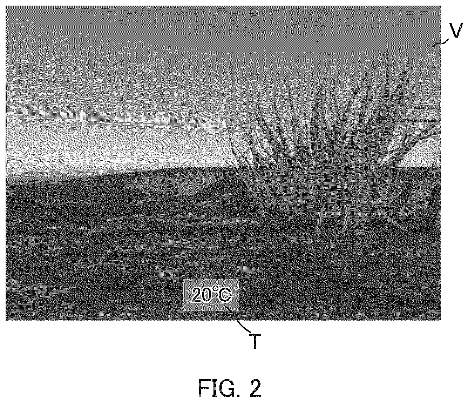

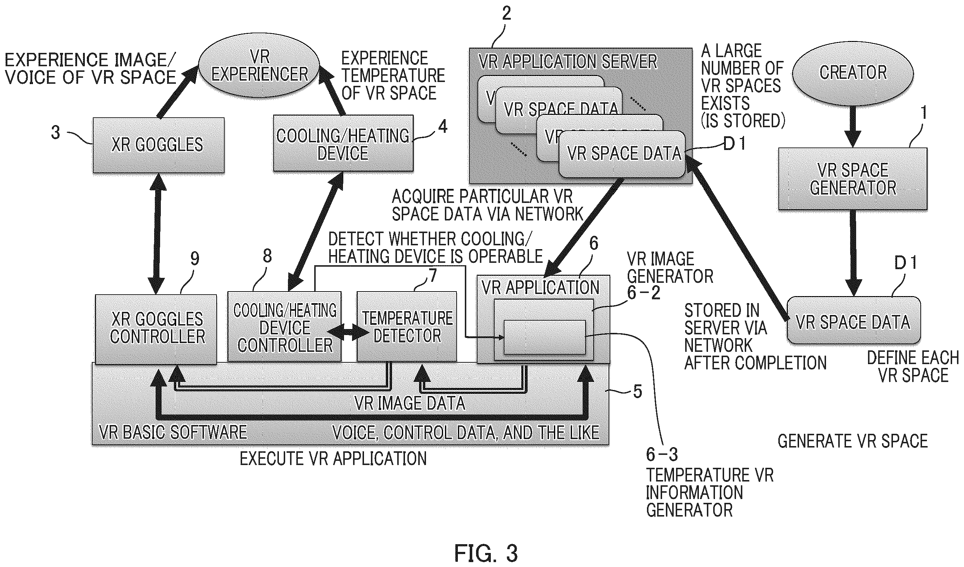

Then, in the present embodiment, VR image generator 6-2 generates VR image data including sensory temperature information in the case that sensory temperature information is set to VR space data D1. For example, as illustrated in FIG. 2, temperature VR information generator 6-3 in VR image generator 6-2 generates VR image data in which sensory temperature information T is superimposed on VR image V as graphics. At this time, temperature VR information generator 6-3 in VR image generator 6-2 displays sensory temperature information T as numerical graphics on the lower side of VR image V VR image generator 6-2 outputs the generated VR image data to XR goggles control software (XR goggles controller 9) through the temperature detection add-on (temperature detector 7). Further, in the configuration of FIG. 3, information on the presence or absence and operation state of cooling/heating device 4 can be retrieved from cooling/heating device controller 8 and used by temperature VR information generator 6-3. Thus, when cooling/heating device 4 is unavailable, temperature VR information generator 6-3 displays no graphics. That is, VR image generator 6-2 acquires the operation state of cooling/heating device 4 acquired from cooling/heating device controller 8, and generates VR image data in which the sensory temperature information is superimposed on the VR image as graphics only when cooling/heating device 4 is in operation.

Once inputting VR image data generated by VR image generator 6-2, temperature detector 7 extracts sensory temperature information from the graphics data superimposed on VR image V For example, temperature detector 7 detects graphics data indicating the number "20°C" superimposed on VR image V

As described above, VR image generator 6-2 generates VR image data including sensory temperature information, which allows the sensory temperature information to be easily detected from the VR image data. Further, VR image generator 6-2 generates VR image data in which sensory temperature information T is superimposed on VR image V as graphics, which allows the sensory temperature information to be further easily detected from the VR image data. In addition, the graphics indicate sensory temperature information T by a number, so that the VR experiencer can know sensory temperature information T and can be given a deeper VR experience.

Temperature detector 7 outputs VR image data to XR goggles controller 9, and outputs the extracted sensory temperature information to cooling/heating device control software (cooling/heating device controller 8). When inputting VR image data from temperature detector 7, XR goggles controller 9 controls XR goggles 3 to display a VR image based on the VR image data. At the same time, cooling/heating device controller 8 controls cooling/heating device 4 so that the temperature of cooling/heating device 4 becomes a sensory temperature corresponding to the VR image, based on the sensory temperature information inputted from temperature detector 7.

This allows cooling/heating device 4 to reproduce the sensory temperature in a VR space, which gives the VR experiencer a deeper VR experience. At this time, the VR experiencer can easily experience a temperature change in the VR space by simply adding software of the sensory temperature detection add-on to the existing VR application.

According to the present embodiment, VR image generator 6-2 generates VR image data including sensory temperature information, so that temperature detector 7 can easily extract sensory temperature information from the VR image data generated by VR image generator 6-2. Then, cooling/heating device controller 8 controls cooling/heating device 4 based on the sensory temperature information extracted by temperature detector 7, which allows the VR experiencer to easily experience a sensory temperature change in a VR space.

### (Embodiment 2)

In Embodiment 2, a case will be described in which VRChat is used as a VR application of a metaverse as a specific example of the VR presence enhancement system.

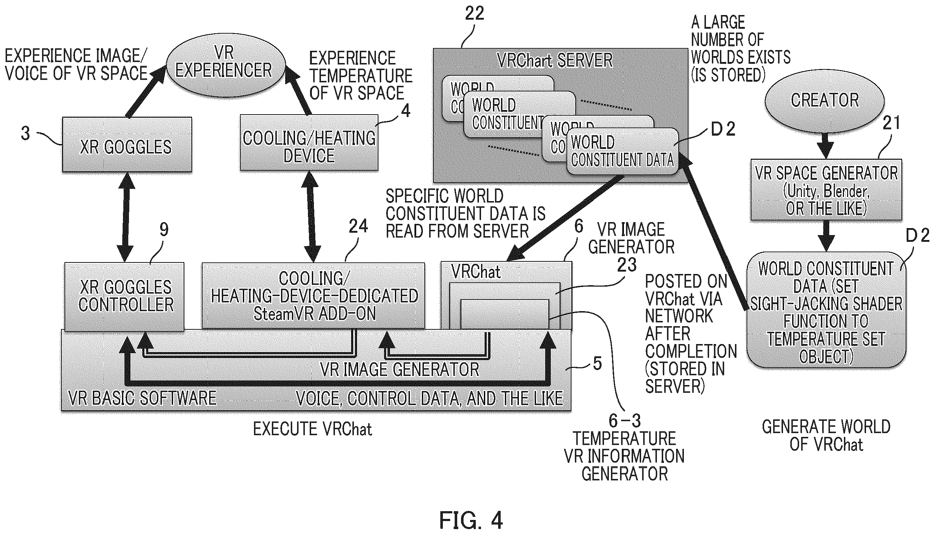

For example, as illustrated in FIG. 4, VR space creator 21, VRChat server 22, and VR image generator 23 may be provided instead of VR space creator 1, VR application server 2, and VR image generator 6-2 of Embodiment 1, respectively, and detector/controller 24 may be provided instead of temperature detector 7 and cooling/heating device controller 8 of Embodiment 1.

VR space creator 21 creates world constituent data D2 in which sensory temperature information is embedded in VR data inputted from a creator by using VR space creation software such as Unity and Blender. Note that world constituent data D2 constitutes VR space data of the present disclosure.

Here, on VRChat, a VR space for each creator called a world is created using CG, and persons other than the creator can enter the world using XR goggles 3 as avatars, experience a VR space defined in the world, and communicate with other persons entering the world as avatars including the owner. For the operations and communication means, methods defined by VRChat are used, but it is allowed to place objects having attributes defined by the creator in the world. The attributes includes shape, color, weight, behavior when touching, and behavior at the inside of an object, which can be defined at the time of creation. This allows the creator to construct the world fairly freely.

In order to attach the sensory temperature attributes to the world, associating sensory temperature information with a predetermined area that is set in a VR space is considered. That is, sensory temperature information is associated in each area. At this time, the sensory temperature information may be set so that the sensory temperature in a predetermined area is constant. Further, the predetermined area is constituted by a 3D object for setting a sensory temperature, and an avatar can enter the 3D object. The sensory temperature information may be set as the attribute of the 3D object. For example, the object may be set to be transparent, not touchable, and freely passed through. Then, when the avatar enters the object, graphics representing the specified sensory temperature may be displayed. In the present disclosure, this is referred to as a sensory temperature set object.

This allows graphics representing the sensory temperature to be displayed on a VR image when the avatar enters the sensory temperature set object. Further, VR space creator 21 can set a function of field-of-view jack shader to the sensory temperature set object. The field-of-view jack shader is activated when the avatar enters the sensory temperature set object, and then graphics indicating a temperature can be displayed at a fixed position in the image displayed on XR goggles 3 although the direction of view of the avatar, that is, the direction of XR goggles 3 changes. These functions are provided to VRChat as standard, and thus the creator can create a world having temperature attributes and use the world on VRChat without using any special tools.

VRChat server 22 stores a plurality of world constituent data including world constituent data D2 created by VR space creator 1.

VR image generator 23 generates VR image data including sensory temperature information based on world constituent data D2 in which sensory temperature information is embedded. VR image generator 23 herein generates VR image data in which sensory temperature information is associated with a predetermined area set in the VR space. At this time, the sensory temperature information may be set so that the sensory temperature in the predetermined area is constant. Further, the predetermined area is constituted by a 3D object for setting a sensory temperature, the 3D object allowing entry into the 3D object, and the sensory temperature information is set as the attribute of the 3D object. For example, VR image generator 23 may place an object that is transparent and does not interrupt the actions of the avatar in a predetermined area. Furthermore, VR image generator 23 may set a sensory temperature as the attribute of the object. Note that VRChat is stored as a VR application in VR image generator 23, and VR image data can be generated in accordance with this VRChat.

Detector/controller 24 extracts sensory temperature information from the VR image data generated by VR image generator 23. Detector/controller 24 includes, for example, a SteamVR add-on dedicated to a cooling/heating device (hereinafter, referred to as cooling/heating-device-dedicated SteamVR add-on), extracts the VR image data transmitted from VR image generator 23 to XR goggles 3 through XR goggles controller 9 in the middle of processing, and detects sensory temperature information combined with the VR image data using the cooling/heating-device-dedicated SteamVR add-on. Detector/controller 24 outputs the VR image data to XR goggles controller 9 while controlling the temperature of cooling/heating device 4 based on the detected sensory temperature information. At this time, sensory temperature information is associated with a predetermined area, and thus, when the avatar moves into the predetermined area, detector/controller 24 controls cooling/heating device 4 so that the temperature becomes a particular temperature, based on the sensory temperature information. On the other hand, when the avatar moves outside the predetermined area, detector/controller 24 stops the control of cooling/heating device 4 which is based on the sensory temperature information associated with the predetermined area. That is, the sensory temperature information associated with the predetermined area does not affect the outside of the predetermined area. Further, sensory temperature information is associated in each area, and thus different sensory temperature information can be set to the same object. For example, for two ice objects, sensory temperature information of 0°C is set to one ice object and 100°C to the other ice object. As described above, detector/controller 24 constitutes a temperature detector and a cooling/heating device controller of the present disclosure.

With such a configuration, when the avatar enters the world of VRChat in which graphics indicating a temperature are configured to be displayed on a VR image and moves to the position where the temperature is set, the graphics indicating the temperature are displayed at a predetermined position in the VR image displayed on XR goggles 3. At this time, the VR image is transmitted from a VR application, that is, VRChat, to XR goggles through SteamVR, which is VR basic software, and through XR goggles control software. The SteamVR add-on software dedicated to a cooling/heating device, which is add-on software having both a function of a temperature-detection add-on implemented as SteamVR add-on software and a function of cooling/heating device control software, captures the VR image displayed on this XR goggles 3. Further, the SteamVR add-on software dedicated to a cooling/heating device specifies graphics indicating the sensory temperature at the predetermined position of the VR image by an image recognition function, converts the graphics into sensory temperature information, and controls the temperature of the cooling/heating device connected by a cable or wirelessly.

Here, when the user of XR goggles 3 shifts his/her eyes in the world by moving his/her head or the like, the VR image displayed on XR goggles 3 changes, but the graphics indicating the sensory temperature continue to be displayed at the predetermined position in the VR image by the field-of-view jack shader function. Further, when the user of XR goggles moves or moves in the world by a warp function and enters an area with a different sensory temperature setting, that is, enters an object with a different sensory temperature setting, graphics indicating a sensory temperature to be displayed changes to graphics indicating a sensory temperature specified for the new sensory temperature set object. Accordingly, a new sensory temperature is set to cooling/heating device 4 used by the user of XR goggles. The sensory temperature set to the sensory temperature set object and the sensory temperature displayed as graphics are generally the same, but may differ from each other depending on the condition of the cooling/heating device used by the user of XR goggles 3 in the case that other elements such as humidity and wind speed are set in the sensory temperature set object or the like. For example, in the case that the sensory temperature set object has a setting of 30 degrees of sensory temperature at 100% humidity and the user of XR goggles 3 has a cooling/heating device in which only the temperature can be controlled, the temperature of the cooling/heating device is possibly controlled to be higher than 30 degrees so that the temperature becomes closer to the actual sensation. This control is sometimes performed by detector/controller 24, rather than during embedding of temperatures in graphics.

Next, a method for creating world constituent data D2 corresponding to VRChat in VR space creator 21 is described.

VR space creator 21 creates a 3D space following the rule by using Unity or Blender, which is a tool for creating a 3D space corresponding to VRChat. When Unity is used, VRChat SDK (VRCSDK) is imported, and then prepared functions (prefab, packaging, scenes, etc.) are constructed. An operation check in the world is possible in the middle of creation, and the created world can be used on VRChat by posting the world on VRChat after the completion.

Note that Unity is a tool for creating a 3D space and used to construct VRChat. In Unity, various functions such as VRChat SDK (VRCSDK), prefab, packaging, scenes, and the like are prepared, and those functions can be reused, which makes creation of a 3D space easier.

Further, the world is composed of, for example, rooms or the like in which participants (players) can meet each other. These rooms are called instances and may have several stages depending on the conditions of players who can participate.

Furthermore, examples of avatars includes a human-imitated object that is created using 3DCG and operable by a participant through XR goggles 3 or the like. In addition, the avatar may be an animal, an imaginary creature, a robot, or the like other than a human. The avatar can be selected from those prepared in advance on VRChat. Further, a 3D modeling avatar following the rule can be uploaded and used. As an operation, the image displayed on the XR goggles is changed by shifting avatar's direction or eyes based on head tracking by the XR goggles. This makes the VR experiencer feel as though he/she was looking around the room. In addition, it is possible to reproduce the action in the real world, for example, reproduction of the movement of the arm by the controller, the moving in the world by head tracking or a warp function, the operation such as grasping an object in the world and moving, and the voice conversation with another avatar. Furthermore, it is possible, by opening the menu by a button operation, to make a conversation (chat) in text, change an avatar, invite a third person from outside the world, change an attribute of the world, change a world, and the like.

Further, an object corresponds to a part constituting a world, for example. Examples of the object include a floor and furniture. For example, specification of color of the object and attachment of graphics to the object is possible, and a function called a component can be set as an attribute. Furthermore, types of a component includes a trigger, by which the avatar grasping or touching the object and the behavior when objects interfere with each other can be set as actions.

In addition, a field-of-view jack shader is a generally-referred function, and can be used as an action, for example. The field-of-view jack shader is called as its name because, when the field-of-view jack shader function is used, graphics are displayed at a specified position in the image viewed through XR goggles, following the movement of the eyes, as though the user saw the world through sunglasses covering the eyes. With this function, the attribute of the world and the attributes set to the objects can be displayed at a position that is not shifted although the line of sight shifts, for example, displayed at the lower part of the image viewed through XR goggles.

Next, an operation of the present embodiment is described.

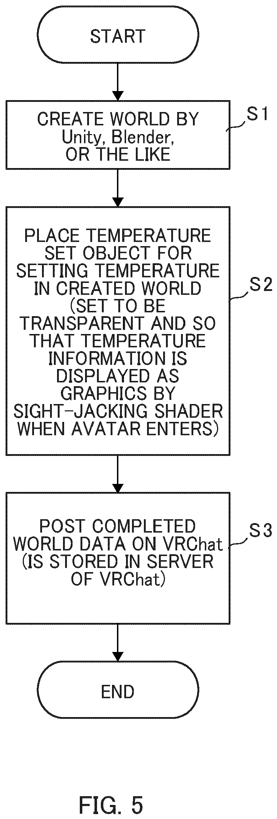

First, as illustrated in FIG. 5, VR space creator 21 creates world constituent data D2 using Unity, Blender or the like in step S1. Then, in step S2, VR space creator 21 places a sensory temperature set object in the area for setting a temperature in the created world constituent data D2. The sensory temperature set object can be set to be transparent so as not to interrupt the movement of the avatar, for example. Then, the sensory temperature set object whose sensory temperature information is associated with a particular area is set so that, when the avatar enters the sensory temperature set object, a particular program or script is activated and the sensory temperature information is displayed at a predetermined position by graphics (e.g., figure or number indicating a temperature) by a field-of-view jack shader. As described above, the sensory temperature set object includes sensory temperature information of the present disclosure.

When world constituent data D2 is completed as described above, VR space creator 21 posts the completed world constituent data D2 on VRChat in step S3. Accordingly, world constituent data D2 is stored in VRChat server 22.

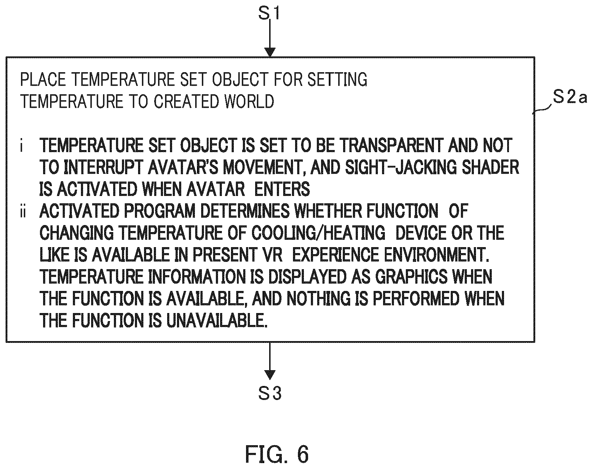

As illustrated in FIG. 6, step S2 in FIG. 5 can be replaced with step S2a according to the system configuration of FIG. 3, in which whether the function of changing a temperature of a cooling/heating device or the like is available in the present VR experience environment is determined, temperature information is displayed as graphics when the function is available, and nothing is performed when the function is unavailable.

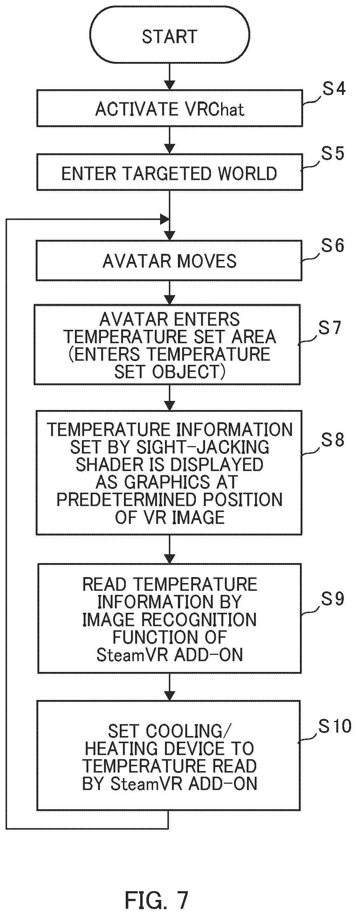

Next, as illustrated in FIG. 7, VR image generator 23 activates VRChat in step S4. VR image generator 23 can then enter the desired world by loading the desired world constituent data D2 from VRChat server 22 in step S5.

VR image generator 23 generates VR image data from world constituent data D2 following VRChat, and outputs the VR image data to XR goggles controller 9 through detector/controller 24. Then, XR goggles controller 9 configures the state of the world as a VR image based on the VR image data and controls XR goggles 3 to display the VR image. Thus, when moving an avatar in step S6, the VR experiencer can experience a change in the VR image according to the movement.

A sensory temperature set object is herein set in the VR image. The sensory temperature set object is set based on, for example, attribute information of a part that constitutes a VR space. Thus, when the avatar enters the sensory temperature set object of the constituent part in step S7, VR image generator 23 activates the field-of-view jack shader. Then, in step S8, VR image generator 23 generates VR image data in which graphics indicating sensory temperature information are superimposed at a predetermined position of the VR image, for example, at the position of the constituent part, by the field-of-view jack shader. This VR image data is outputted from VR image generator 23 to XR goggles controller 9 through detector/controller 24. Thus, in step S9, detector/controller 24 reads sensory temperature information of the VR image by an image recognizing function of the cooling/heating-device-dedicated SteamVR add-on.

As described above, VR image generator 23 superimposes graphics indicating sensory temperature information of a part that constitutes a VR space, on a VR image based on the attribute information of the constituent part, which allows the sensory temperature information of the constituent part to be easily detected.

VR image data may herein include sensory temperature information associated with an area that is set in the VR space. At this time, sensory temperature information may be set so that a sensory temperature in the area is constant. Further, sensory temperature information may be set as an attribute of a 3D object placed in the VR space of the VR image. Accordingly, when the avatar of the VR experiencer enters the 3D object in the VR space, VR image generator 23 can read out the sensory temperature information of the 3D object and superimpose the sensory temperature information on the VR image as graphics. As described above, when the avatar enters the 3D object, VR image generator 23 acquires the temperature information set to the 3D object, and the processing of the VR image or the cooling/heating device is performed based on the temperature information. Therefore, no complicated processing is required, such as calculation using a distance from a constituent part having temperature information (e.g., heat source such as a flame) or characteristics of the constituent part, and therefore a cooling/heating device can be set to a set temperature without increasing a load (e.g., calculation amount) of the computer.

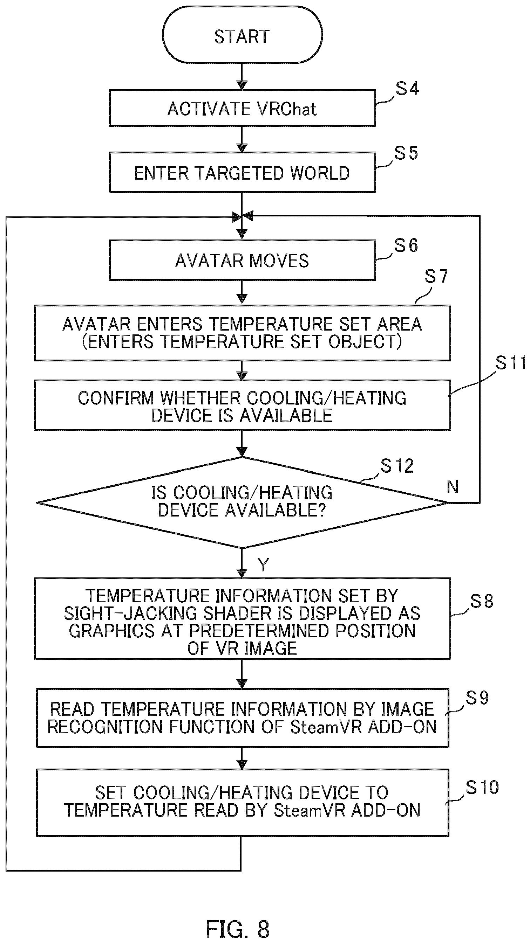

As illustrated in FIG. 8, steps S11 and S12 may be added between steps S7 and S8 of FIG. 7 according to the system configuration of FIG. 3. Specifically, VR image generator 23 confirms whether a function of changing a temperature of a cooling/heating device or the like is available in the present VR experience environment in step S11, and make a determination in step S12. Then, when the function of changing a temperature is unavailable in step S12, nothing may be performed.

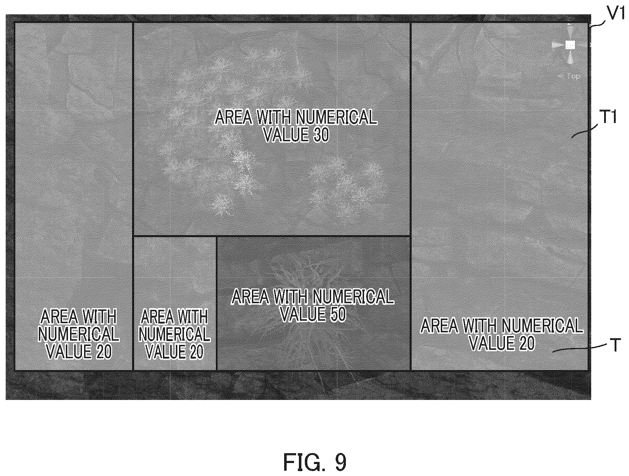

For example, as illustrated in FIG. 9, sensory temperature set object T1 may be set for each predetermined area in the three-dimensional coordinates of VR image V1, and a numerical value indicating sensory temperature information T may be provided to sensory temperature set object T1. This VR image V1 indicates a state of the world viewed from above. When the avatar of the VR experiencer enters certain sensory temperature set object T1 in VR image V1, VR image generator 23 activates the field-of-view jack shader to superimpose and display sensory temperature information T of sensory temperature set object T1 as graphics at a predetermined position of the VR image. Thus, each time the avatar of the VR experiencer moves though the areas, VR image generator 23 successively displays sensory temperature information T set to the area where the avatar has moved, at the predetermined position of the VR image. Furthermore, when the avatar of the VR experiencer moves from the area in which sensory temperature information T is set to the area in which sensory temperature information T is not set, VR image generator 23 deletes sensory temperature information T displayed on the VR image.

Note that sensory temperature set object T1 is not limited to a rectangular-shaped area, and can be set as a three-dimensional-shaped free-form area. For example, sensory temperature set object T1 may have a shape covering a fountain, and the temperature of the fountain may be set as sensory temperature information. Alternatively, sensory temperature set object T1 may have a shape covering a flame, and the temperature of the flame may be set as sensory temperature information.

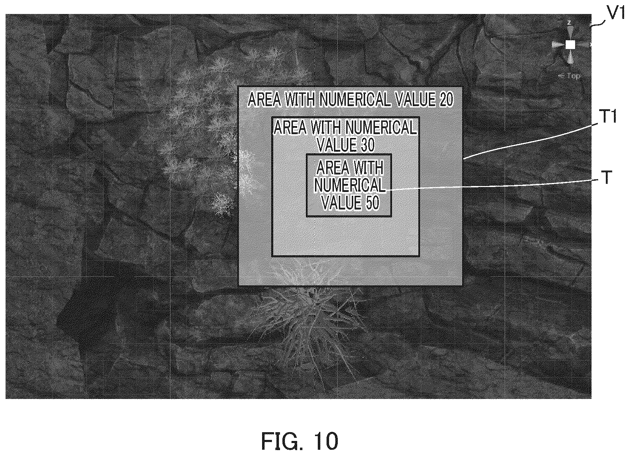

Further, as illustrated in FIG. 10, sensory temperature set object T1 may be set so that a high-temperature area is surrounded by a low-temperature area (set so that an area having a rectangular shape and a numerical value of 50 is surrounded by an area having a numerical value of 30 and an area having a numerical value of 20 in this order). That is, sensory temperature set object T1 may be set as though a heat source was located in the center and the temperature increased as the heat source was approached. Alternatively, sensory temperature set object T1 may be set as though a low-temperature source was located in the center and the temperature decreased as the low-temperature source was approached.

Note that the area with the numerical value 50, the area with the numerical value 30, and the area with the numerical value 20 may each be formed in a rectangular shape and may be placed so as to overlap each other. Then, when the area with the numerical value 50, the area with the numerical value 30, and the area with the numerical value 20 overlap each other, VR image generator 23 may display sensory temperature information T based on a predetermined display rule. For example, when the areas overlap each other, VR image generator 23 may preferentially display sensory temperature information T of the area whose set temperature is higher. Further, priority information indicating the priorities for displaying sensory temperature information T may be associated with the area with the numerical value 50, the area with the numerical value 30, and the area with the numerical value 20 in advance. This allows VR image generator 23 to display sensory temperature information T of the area having the highest priority among the areas overlapping each other. At this time, the priorities for displaying sensory temperature information T may be set for each part where the areas overlap. For example, when a plurality of areas is placed so as to overlap each other in the section where a flame is constituted, the priorities may be set so as to preferentially display sensory temperature information T of the area having a higher temperature. Alternatively, when a plurality of areas is placed so as to overlap each other in the section where an ice is constituted, the priorities may be set so as to preferentially display sensory temperature information T of the area having a lower temperature. As described above, VR image generator 23 can display appropriate sensory temperature information T based on the predetermined display rule.

As described above, when the avatar of the VR experiencer enters a 3D object in a VR space, VR image generator 23 can read out the sensory temperature information of the 3D object and superimpose the sensory temperature information on the VR image as graphics. This allows detector/controller 24 to easily detect the sensory temperature information of the 3D object.

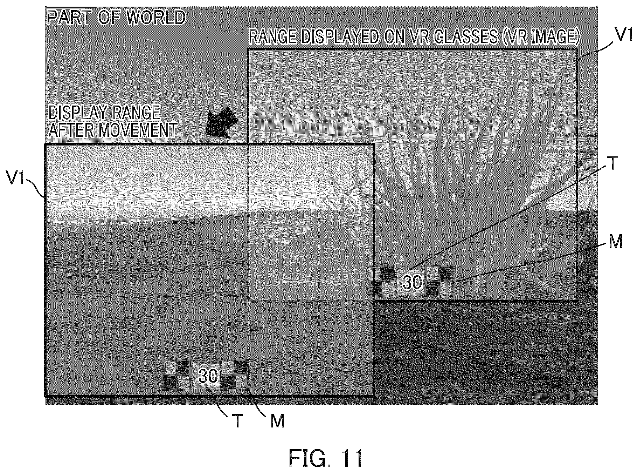

Further, as illustrated in FIG. 11, in addition to sensory temperature information T, VR image generator 23 may superimpose special mark M on the VR image in such a way as to interpose graphics indicating the number of sensory temperature information T. Alternatively, only a special mark may be displayed instead of the character. In this example, sensory temperature information T indicates 30°C. This mark M is specified by an image recognition function of a cooling/heating-device-dedicated SteamVR add-on, and the numerical value indicating sensory temperature information T is read. The reason for interposing graphics by such special mark M is to avoid incorrectly detecting other numbers in the world as sensory temperature information T. Further, in FIG. 11, graphics of sensory temperature information T are displayed at the lower center of VR image V1, and such displaying of sensory temperature information T at a particular position also leads to avoiding false recognition. Furthermore, VR image V1 changes when the avatar moves or the VR experiencer shifts his/her eyes, but sensory temperature information T is constantly displayed at the same position by the function of the field-of-view jack shader (FIG. 11 illustrates an example in which the image moves from the upper right to the lower left). Needless to say, the various display patterns of sensory temperature information T can be used as long as the patterns are set in advance, and the display position can be freely set in VR image V1. In the present embodiment, the temperature is indicated by a number, so that not only the effect of cooling/heating device 4 but also the effect of having more reality can be expected by the VR experiencer recognizing the temperature of the world as a numerical value, as in the case of looking at the temperature of a thermometer, for example.

When reading sensory temperature information of the VR image by the cooling/heating-device-dedicated SteamVR add-on as described above, detector/controller 24 controls the temperature of cooling/heating device 4 to the read sensory temperature information in Step S10. Then, the processes of steps S6 to S10 are repeated until VRChat is completed.

According to the present embodiment, VR image generator 23 superimposes graphics indicating sensory temperature information of a part constituting a VR space, on a VR image based on the attribute information of the constituent part, which allows the sensory temperature information of the constituent part to be easily detected.

Note that, in Embodiments 1 and 2 described above, cooling/heating device control software (cooling/heating device controller) is implemented on VR basic software, but the implementation is not limited thereto as long as the software can control cooling/heating device 4.

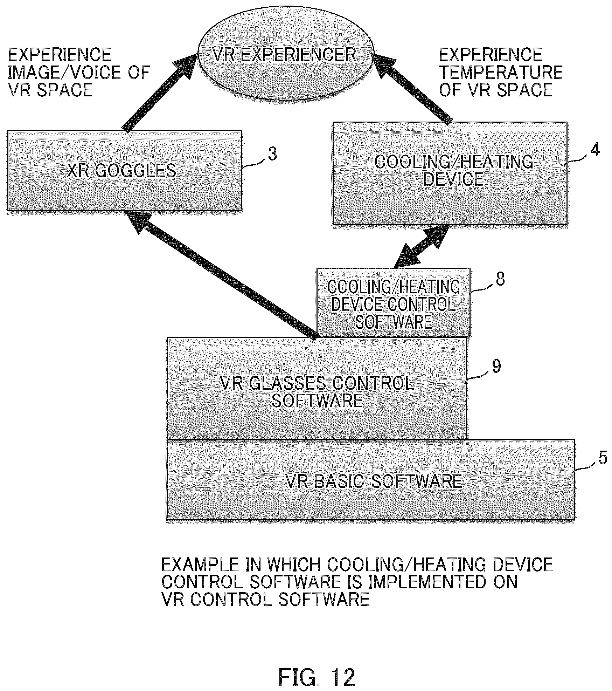

For example, as illustrated in FIG. 12, cooling/heating device control software may be implemented on XR goggles control software.

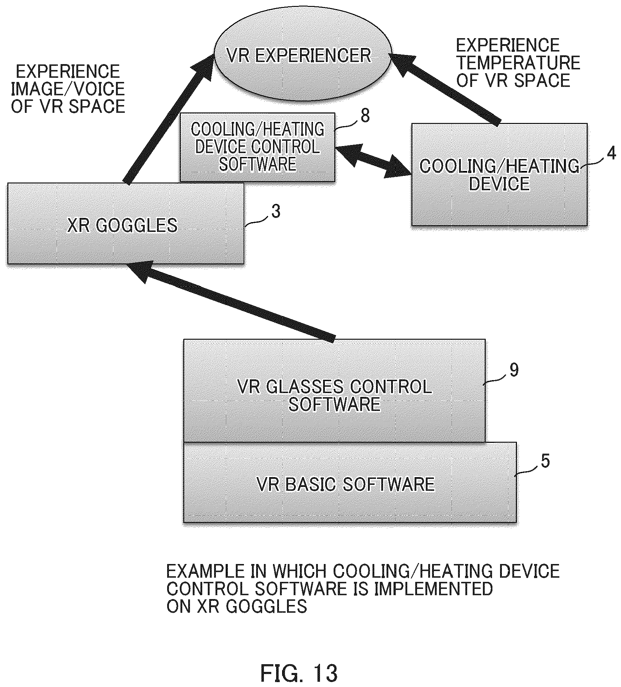

Further, as illustrated in FIG. 13, cooling/heating device control software may be implemented on XR goggles 3.

Further, in Embodiments 1 and 2 described above, graphics indicating sensory temperature information are positioned at the lower center of the VR image, but the position of the graphics may be any position such as the upper center.

Furthermore, in Embodiments 1 and 2 described above, graphics indicating sensory temperature information are not limited to visually recognizable graphics. For example, sensory temperature information may be superimposed on a VR image as a digital watermark. The sensory temperature information superimposed using a digital watermarking technology is not visually recognizable, but recognizable by the image recognition function of a temperature detector.

Further, mark M corresponding to sensory temperature information T illustrated in FIG. 11 may be superimposed on VR image V1 as a digital watermark. At this time, sensory temperature information T may be superimposed on VR image V1 so as to be visually recognizable.

Further, in Embodiments 1 and 2 described above, whether to change the color of graphics indicating sensory temperature information depending on the visual condition of the world can be determined in advance. At this time, the color of graphics is detectable as long as the colors of graphics indicating sensory temperature information are set in the image recognition function of the cooling/heating-device-dedicated SteamVR add-on in advance.

Further, although sensory temperature information is transmitted as graphics into the cooling/heating-device-dedicated SteamVR add-on in Embodiments 1 and 2 described above, sensory temperature information of a sensory temperature set object stored as a program in VRChat may be directly transmitted to the cooling/heating-device-dedicated SteamVR add-on.

As described above, temperature information set to a 3D object is acquired when the avatar enters the 3D object and then processing is performed, so that no complicated processing is required, such as calculation using a distance from a heat source or the property of the heat source, and thus it is possible to set a cooling/heating device to a set temperature without increasing a load of the computer.

Further, in Embodiments 1 and 2 described above, VRChat can configure a cooling/heating-device-dedicated SteamVR add-on as add-on software by which setting information in the world configuration information can be read at the time when world constituent data are read. This makes it possible to acquire sensory temperature information and control the cooling/heating device by reading the overall temperature of the world or setting information of the sensory temperature set object placed in the world.

Furthermore, in Embodiments 1 and 2 described above, as cooling/heating device 4, any type of devices can be used as long as the device can be externally controlled, such as a clothing type, for example, a vest, a seat type on which the user sits, or an air conditioner that changes the temperature of the entire room. Further, a humidifier, dehumidifier, fan, and the like may be simultaneously controlled to control the sensory temperature by simultaneously controlling the wind speed and the humidity affecting the temperature.

Moreover, in Embodiments 1 and 2 described above, the VR image generator can superimpose, on a VR image as graphics, environmental information (non-audiovisual information) other than the sensory temperature information, which cannot be acquired visually or audibly in a VR space. Then, an environment adjustment device that adjusts the environment of the VR experiencer can be controlled based on the non-audiovisual information detected by a temperature detector. That is, it is possible to increase immersiveness into the world by displaying not only sensory temperature information but also various parameters of the real world such as smell and acquiring these pieces of information as described above or acquiring these pieces of information by another method to convey the information to the user of XR goggles 3 and/or by controlling a device such as a smell generator. Thus, it is possible to easily experience not only a temperature but also non-audiovisual information such as smell and wind of the VR space.

Further, although VRChat is exemplified as a metaverse application in Embodiments 1 and 2 described above, it is possible to control a temperature of a cooling/heating device using the method disclosed in the present invention in another metaverse application, such as an application capable of setting a sensory temperature set object that is transparent and does not interrupt the avatar's entering and for which an appropriate program or script is executed when the avatar enters or leaves.

Although the embodiments according to the present invention have been described in detail with reference to the drawings, the functions of each apparatus described above can be realized by a computer program.

A reading apparatus of a computer that implements the functions of the above-described apparatuses by a program reads the program from a recording medium in which the program for realizing the functions of the above-described apparatuses is recorded, and stores the program in a storage apparatus. Alternatively, a network card communicates with a server apparatus connected to the network, and stores, in the storage apparatus, a program for implementing the functions of the respective apparatuses downloaded from the server apparatuses.

Then, the CPU copies the programs stored in the storage apparatus to the RAM, and sequentially reads and executes instructions included in the programs from the RAM, thereby implementing the functions of the respective apparatuses.

This application is based on U.S. Provisional Application No. 63/293,983, filed on December 27, 2021, the entire contents of which are incorporated herein by reference in its entirety.

### Industrial Applicability

AVR presence enhancement system according to the present disclosure can be used in a system for displaying a VR image on XR goggles.

### Reference Signs List

1, 21 VR space creator
2 VR application server
3 XR goggles
4 Cooling/heating device
5 VR basic software
6 VR application
6-2, 23 VR image generator
6-3 Temperature VR information generator
7 Temperature detector
8 Cooling/heating device controller
9 XR goggles controller
22 VRChat server
24 Detector/controller
D1 VR data
D2 World constituent data
M Mark
T Sensory temperature information
T1 Sensory temperature set object
V, V1 VR image

## Claims

1. A VR presence enhancement system, comprising:
a VR image generator that generates VR image data including sensory temperature information, based on VR space data in which the sensory temperature information is embedded;
a temperature detector that extracts the sensory temperature information from the VR image data generated by the VR image generator;
an XR goggles controller that controls XR goggles to display a VR image based on the VR image data; and
a cooling/heating device controller that controls a cooling/heating device based on the sensory temperature information extracted by the temperature detector, the cooling/heating device adjusting a sensory temperature of a VR experiencer wearing the XR goggles.

2. The VR presence enhancement system according to claim 1, wherein
the VR image generator generates the VR image data in which the sensory temperature information is superimposed on the VR image as graphics.

3. The VR presence enhancement system according to claim 2, wherein
the VR image generator superimposes, based on attribute information of a part constituting a VR space, graphics indicating the sensory temperature information of the part on the VR image.

4. The VR presence enhancement system according to claim 2, wherein
the graphics indicate the sensory temperature information by a number.

5. The VR presence enhancement system according to claim 1, wherein
the sensory temperature information is superimposed on the VR image as a digital watermark.

6. The VR presence enhancement system according to claim 1, wherein
the VR image data includes the sensory temperature information associated with an area that is set in a VR space.

7. The VR presence enhancement system according to claim 6, wherein
the sensory temperature information is set so that a sensory temperature within the area is constant.

8. The VR presence enhancement system according to claim 6, wherein
the area is constituted by a 3D object for setting a sensory temperature, the 3D object allowing entry into the 3D object, and
the sensory temperature information is set as an attribute of the 3D object.

9. The VR presence enhancement system according to claim 8, wherein
the VR image generator reads out the sensory temperature information of the 3D object when an avatar of the VR experiencer enters the 3D object in the VR space, and superimposes the sensory temperature information on the VR image as graphics.

10. The VR presence enhancement system according to claim 9, wherein
the VR image generator acquires an operation state of a cooling/heating device from the cooling/heating device controller, and generates the VR image data in which the sensory temperature information is superimposed on the VR image as graphics when the cooling/heating device is in operation.

11. The VR presence enhancement system according to claim 2, wherein
the VR image generator superimposes environmental information other than the sensory temperature information on the VR image as graphics, and controls an environment adjustment device adjusting an environment of the VR experiencer, based on the environmental information other than the sensory temperature information detected from the graphics.

12. The VR presence enhancement system according to claim 1, further comprising a VR generator that places an obj ect in an area of a VR space for setting a sensory temperature when creating a VR space, the object being transparent and not interrupting an action of an avatar, and sets, to the VR space data, an operation of displaying the sensory temperature information as graphics in a field of view of the XR goggles when the avatar enters the object, based on the sensory temperature information set as an attribute of the obj ect.

13. A VR presence enhancement program that causes a computer to execute processing comprising:
generating VR image data including sensory temperature information based on VR space data in which the sensory temperature information is embedded;
extracting the sensory temperature information from the generated VR image data;
controlling XR goggles to display a VR image based on the VR image data; and
controlling a cooling/heating device adjusting a sensory temperature of a VR experiencer wearing the XR goggles based on the extracted sensory temperature information.
